# FASCICULE DE BREVET EUROPEEN

(11) **EP 3 136 283 B1**
(45) Date de publication et mention de la délivrance du brevet: **16.12.2020**
(21) Numéro de dépôt: 16186040.8
(22) Date de dépôt: 26.08.2016
(51) Int. Cl.: G06F 21/60, G06F 21/77, G06Q 20/34

(54) **DISPOSITIF ET PROCÉDÉ SÉCURISATION DE COMMANDES ÉCHANGÉES ENTRE UN TERMINAL ET CIRCUIT INTÉGRÉ**
VORRICHTUNG UND VERFAHREN ZUR SICHERUNG DER AUSGETAUSCHTEN BEFEHLE ZWISCHEN EINEM ENDGERÄT UND EINEM INTEGRIERTEN SCHALTKREIS
DEVICE AND METHOD FOR SECURING COMMANDS EXCHANGED BETWEEN A TERMINAL AND AN INTEGRATED CIRCUIT

(30) Priorité: 27.08.2015 FR 1557983
(43) Date de publication de la demande: 01.03.2017
(73) Titulaire: Ingenico Group, 75015 Paris (FR)
(72) Inventeur: NACCACHE, David, 75018 Paris (FR); GERAUD, Rémi, 92160 Antony (FR); LEGER, Michel, 78100 Saint-Germain-en-Laye (FR)
(74) Mandataire: Vidon Brevets & Stratégie

(56) Documents cités:
- WO-A1-2012/167352
- US-A1- 2009 028 078
- US-A1- 2015 098 564
- Achim Pietig: "Functional Specification of the OpenPGP application on ISO Smart Card Operating Systems, Version 3.0", , 30 juin 2015 (2015-06-30), XP055205678, Extrait de l'Internet: URL:http://g10code.com/docs/openpgp-card-3 .0.pdf [extrait le 2015-07-31]
- Isabelle Attali ET AL: "Java on Smart Cards: Programming and Security", First International Workshop, JavaCard 2000, 14 septembre 2000 (2000-09-14), XP055257525, Extrait de l'Internet: URL:http://rd.springer.com/content/pdf/10. 1007/3-540-45165-X.pdf [extrait le 2016-03-11]
- Bsi ET AL: "Advanced Security Mechanisms for Machine Readable Travel Documents and eIDAS Token", Part 3 - Common Specifications Version 2.20, 3 février 2015 (2015-02-03), XP055258090, Extrait de l'Internet: URL:https://www.bsi.bund.de/SharedDocs/Dow nloads/EN/BSI/Publications/TechGuidelines/ TR03110/BSI_TR-03110_Part-3-V2_2.pdf?__blo b=publicationFile&v=1 [extrait le 2016-03-14]
- "GlobalPlatform Card Technology - Secure Channel Protocol 03 - Card Specification v 2.2 Amendment D, version 1.0", INTERNET CITATION, avril 2009 (2009-04), pages 1-16, XP009182501, Extrait de l'Internet: URL:http://www.globalplatform.org/specific ationscard.asp [extrait le 2015-02-10]

## Description

### 1. Domaine

La technique proposée se rapporte aux échanges entre un terminal et une carte à puce. Plus particulièrement, la technique proposée se rapporte à la sécurisation de tels échanges. La technique proposée vise plus particulièrement à sécuriser les échanges entre un terminal et circuit intégré, ce circuit intégré pouvant prendre place dans une carte à puce, qui peut être lue par le terminal. Cette lecture peut être réalisée avec ou sans contact, en fonction de la technologie employée, tant dans le terminal de lecture que dans le circuit intégré.

Plus précisément, l'invention concerne la mise en œuvre d'extensions matérielles et logicielles permettant la protection de la nature des commandes échangées entre un lecteur et un circuit intégré.

### 2. Art antérieur

### 2.1. Communication entre un terminal et un circuit intégré, tel qu'embarqué dans une carte à puce.

Au niveau applicatif, les échanges entre lecteur de cartes (ci-après « lecteur » ou « terminal »), et une carte à puce qui y est insérée sont réalisés au moyen d'unités de données de protocole applicatif APDU (« *Application Protocol Data Unit* »).

### 2.1.1. Le protocole de base

Les APDUs sont des commandes transmises par le terminal à la carte. Les APDUs régissent aussi la collecte des réponses transmises par la carte au terminal.

Le format de ces commandes et réponses est défini au niveau applicatif par la norme ISO 7816-4 et ses annexes A et B. Les commandes APDU sont toujours déclenchées par le terminal et la carte doit être constamment à l'écoute d'APDUs provenant du terminal. En d'autres termes, selon la norme ISO 7816-4 et utilisant la terminologie couramment en usage auprès des Hommes de l'art, le terminal est en mode « maître » alors que la carte est en mode « esclave ».

Le terminal fournit à la carte l'alimentation en énergie et une horloge dont la fréquence est typiquement 3.5 Mhz. L'échange de données entre carte et terminal est assuré par une liaison série dont le débit est compris entre 9600 et 230,400 bauds. Le terminal produit une requête (APDU) qui comporte (conformément au protocole de transport T=0) au moins 5 octets (CLA INS P1 P2 P3) et des octets optionnels (dont la longueur Lc est précisée par la valeur de l'octet P3).

La carte réagit en délivrant un message de réponse qui comprend des octets d'information (dont la longueur « Le » est spécifiée par l'octet P3) et un mot de statut (SW1 SW2) large de deux octets SW1 SW2 = 9000 notifie le succès d'une opération. Lorsque la longueur de la réponse n'est pas connue à priori un mot de statut «61 Le» indique la longueur du message de réponse. Une fois ce paramètre connu le terminal obtient l'information au moyen de la commande GET RESPONSE (CLA C0 00 00 Le), comme il sera détaillé plus bas.

Les opérations de lecture et d'écriture et l'invocation des fonctions cryptographiques sont associées à des APDUs spécifiques. L'information stockée dans la carte est stockée dans un système de fichiers qui inclut un répertoire racine (MF *Master File*), des sous répertoires (DF *Dedicated File*) et des fichiers (EF *Elementary File*). Chaque composant est identifié par un nombre de deux octets ; la navigation à travers ce système s'effectue à l'aide d'APDUs particulières (SELECT FILE, READ BINARY, WRITE BINARY) dont le détail dépasse le cadre de la présente technique.

La sécurité de la communication entre la carte et le terminal est assurée par des protocoles de simple ou mutuelle authentification (transportés par des APDUs), qui en cas de succès autorisent l'accès aux fichiers.

La mise en œuvre d'une carte utilise donc un paradigme d'appel de procédure mis en œuvre (transporté) par des APDUs généralement définies pour un système d'exploitation de carte spécifique. Le format de l'information embarquée est connu a priori et classé par un système de fichiers 7816.

### 2.1.2. Le transport des messages APDU (TPDU)

Il existe plusieurs protocoles de transports. Il est nécessaire de définir des règles pour par exemple réaliser la segmentation des APDUs en blocs compatibles avec la taille maximale autorisés par ces protocoles. Nous ne détaille ici que les règles définies pour le protocole T=0.

L'en tête d'un TPDU (T=0) comporte toujours cinq octets (CLA INS P1 P2 P3) au lieu de quatre dans le cas des APDU.
- Cas 1. TPDU = CLA INS P1 P2 P3=00
- Cas 2, ordre sortant :
   - **Message court (short),** CLA INS P1 P2 P3=Le, ordre sortant de 1 à 256 (Le=0) octets. Le statut SW1=6C SW2=La peut indiquer la valeur maximale La supportée par la carte.
   - **Message long (Extended),** un nombre adapté (Le/256) de requête courtes CLA INS P1 P2 P3=0 est générée. Dans la dernière requête P3 est égal au reste modulo 256 de Le. Une réponse sans erreur se termine par le statut 9000 (dernier segment de la réponse) ou 61 xx (longueur P3 de la prochaine requête).
- Cas 3, ordre entrant :
   - **Message Court (short)** CLA INS P1 P3 P3=Lc [Lc octets]. Ordre entrant de 1 à 255 octets. Un statut 9000 indique l'exécution correcte de l'opération.
   - **Message long (Extended).** Une série de commandes ENVELLOPE, CLA C2 P1 P2 P3 [P3 bytes 1,..,255] est utilisée pour réaliser la segmentation de l'APDU à transmettre. Le statut de la réponse est 9000 en cas d'exécution correcte.
- Cas 4, ordre sortant/entrant :
   - **Message court (short)** CLA INS P1 P2 P3=Lc.[Lc bytes]. Un status 61 Le indique la taille de la réponse. La commande sortante GET_RESPONSE CLA C0 P1 P2 P3=Le permet de lire le message de réponse dont la taille est Le.
   - **Message long (Extended).** On utilise dans ce cas les commandes ENVELLOPE et GET_RESPONSE.

Parmi les paramètres définissant les formats des APDU, le paramètre CLA possède un rôle particulier dans la cadre de la sécurisation des échanges (mode Secure Messaging). Ainsi, le paramètre CLA est défini pour des types de cartes particuliers ou par des fabricants particuliers. 00 est la valeur ISO, A0 pour les cartes SIM, BC a été utilisé par Bull CP8, FF est réservé pour le protocole PTS. Le quartet de poids fort est défini par le standard ISO 7816 pour les valeurs 0,8,9 et A. Dans ce cas le quartet de poids faible comporte deux bits qui indiquent l'usage du *Secure Messaging* (SM : signature et chiffrement des APDUs), et les deux derniers bits désignent un numéro de canal logique (compris entre 0 et 3). La notion de canal logique consiste à utiliser simultanément plusieurs applications logées dans la carte.

### 2.1.3. Le mode Secure Messaging

Le but de la transmission sécurisé de messages (SM) est de protéger une partie des messages envoyés depuis et à destination d'une carte, en assurant deux fonctionnalités élémentaires de sécurité : l'authentification des données et la confidentialité des données.

La transmission sécurisée de messages est réalisée en appliquant un ou plusieurs mécanismes de sécurité. Chaque mécanisme de sécurité met en jeu un algorithme, une clé, un argument et souvent une donnée initiale.
- La transmission et la réception de champs de données peuvent être entrelacées avec l'exécution des mécanismes de sécurité. Cette spécification n'exclut pas la détermination par une analyse séquentielle des mécanismes et des outils de sécurité qui sont utilisés pour traiter le restant des champs de données.
- Deux ou plusieurs mécanismes de sécurité peuvent utiliser le même algorithme dans différents modes d'opération (voir ISO/IEC 7816). Les présentes spécifications des règles de remplissage n'excluent pas une telle fonctionnalité.

Cette clause définit 3 types d'objets de données relatifs à SM :
- des objets de données en clair, destinés à transporter des données en clair ;
- des objets de données associés aux mécanismes de sécurité, destinés à transporter le résultat des calculs effectués par les mécanismes de sécurité ;
- des objets de données de sécurité auxiliaires, destinés à transporter des références de contrôle et des descripteurs de réponses.

Sans qu'il soit nécessaire d'entrer dans les détails techniques de l'implémentation du mode de transmission sécurisée de messages, on peut souligner que divers mécanismes sont mis en œuvre ; ils permettent de réaliser une protection de certains objets de données transitant entre le terminal et le circuit intégré (il s'agit par exemple des objets de données pour l'authentification). D'autres objets de données, dont la sensibilité est moindre, ne sont pas nécessairement protégés.

En effet, le chiffrement et la signature (ou l'authentification des données) servent traditionnellement afin de sécuriser les données échangées entre la carte et le terminal. Ainsi, un terminal qui chiffre et authentifie ses commandes APDU protégera seulement les données transférées contre des interceptions et des modifications. Les commandes restant, quant à elles, en clair.

Le chiffrement et l'authentification de données échangées entre des appareils communicants relèvent de méthodes connues à l'homme de l'art, dont notamment le déploiement d'infrastructures à clés publiques (*Public Key Infrastructure,* PKI). Une PKI est un ensemble de composants physiques et logiciels permettant de gérer le cycle de vie de *certificats électroniques.* Ces certificats permettent d'effectuer des opérations cryptographiques, comme le chiffrement ou la signature numérique qui offrent les garanties suivantes lors des transactions électroniques :
- confidentialité : seul le destinataire (ou le possesseur) légitime d'un message peut en avoir une vision intelligible ;
- authentification : lors de la transmission d'un message ou lors de la connexion à un système, on connaît sûrement l'identité de l'émetteur ou l'identité de l'utilisateur qui s'est connecté ;
- intégrité : on a la garantie qu'un message expédié n'a pas été altéré, accidentellement ou intentionnellement ;
- non-répudiation : l'auteur d'un message ne peut pas renier son œuvre.

On notera qu'il existe des techniques permettant d'assurer *à la fois* la confidentialité, l'authentification et l'intégrité. Il s'agit par exemple de procédés de « *signcryption* » ou de *« chiffrement authentifié ».*

### 2.2. Inconvénients de l'art antérieur.

Comme il a été vu, le mode Secure Messaging n'assure que la confidentialité des données et non la confidentialité **des commandes.** Ainsi, le déploiement de SM et d'une PKI afin d'assurer des services de chiffrement et d'authentification n'est d'aucune aide contre une attaque qui consiste à inférer des informations permettant de nuire à la sécurité en utilisant l'information fournie par les entêtes d'APDU CLA INS P1 P2 P3

De telles attaques peuvent par exemple être :
- Le blocage d'APDUs identifiées comme défavorables à l'utilisateur (par exemple, blocage de l'effacement d'un fichier de clés, suite à la cessation de paiement d'un abonnement. Un autre exemple étant le blocage d'une commande de débit.).
- Inversement, les attaques par rejeu. Ces attaques consistent à rejouer une APDU qui donnant un bénéfice à l'utilisateur (par exemple, crédit d'un portemonnaie d'unités monétaires).
- Les attaques dites par « l'Homme du milieu » (*man in the middle attacks*) qui consistent à se mettre entre la carte et le terminal et dévier la communication entre carte et terminal à des instants précis.
- Les attaques de retro-conception consistant à espionner les échanges entre le terminal et la carte afin d'inférer le fonctionnement du système sous-jacent et ainsi compromettre la propriété intellectuelle appartenant aux concepteurs du système. Les attaques par retro-conception peuvent aussi permettre de détecter des failles de protocole ou de logique transactionnelle et permettre des attaques logicielles sur le système sous-jacent.

L'utilisation de dispositifs cryptographiques externes actuels tels que les cartes-à-puce actuelles n'apporte pas de réponse à ces menaces car le protocole ISO 7816 permet à l'attaquant de comprendre ce que fait la carte (sans nécessairement pour autant permettre à l'attaquant de comprendre les données transmises entre la carte et le terminal si le mode SM (Secure Messaging) est utilisé).

Ainsi qu'il a été vu, si on suppose que l'attaquant, contrôle totalement le lien entre la carte et le terminal et, de plus, dispose d'une connaissance de la signification des entêtes d'APDU CLA INS P1 P2 P3 échangés entre la carte et le terminal, alors il devient impossible de garantir la confidentialité totale de l'application et/ou du système même si la confidentialité et l'intégrité des données échangées reste garantie par un procédé de SM (Secure Messaging). Il s'agit là d'inconvénients majeurs qui ont permis de nombreuses attaques contre des systèmes mettant en oeuvre des cartes-à-puce. Les documents "Functional Spécification of the OpenPGP application on ISO Smart Card Operating Systems, Version 3.0" de Achim Pietig et (US2009/028078 A1) constituent des documents pertinents de l'art antérieur.

### 3. Résumé

La présente invention est définie par les revendications indépendantes.

La présente technique ne présente pas ces inconvénients de l'art antérieur. Plus particulièrement, la présente technique se rapporte à un procédé de transmission de données. Plus particulièrement, l'invention se rapporte à un Procédé de transmission de données, mis en œuvre entre un terminal et un circuit intégré, ledit terminal et ledit circuit intégré communicant par l'intermédiaire d'une interface d'émission et de transmission de données, ledit procédé comprenant au moins une itération des étapes suivantes, mises en œuvre par le terminal :
- génération, d'une commande destinée audit circuit intégré, ladite commande comprenant un entête de commande ;
- chiffrement de ladite commande, délivrant une commande chiffrée ;
- création d'une deuxième commande, ladite commande comprenant un entête de commande et des données, lesdites données étant constituées au moins en partie de ladite commande chiffrée ;
- transmission de ladite deuxième commande audit circuit intégré.

Ainsi, un attaquant tentant de déterminer le type ou l'enchainement des commandes échangées entre un terminal et un circuit intégré, n'est pas en mesure d'obtenir une information utile. En effet, l'observation des échanges entre le terminal et le circuit intégré ne permet pas d'obtenir des données pertinentes. Plus particulièrement, l'observation des échanges en permet pas de déduire quelle commande est transmise puisque la commande réelle, celle qui est utilisée pour réaliser un traitement, est chiffrée et encapsulée dans une autre commande.

Selon une caractéristique particulière, un tel circuit intégré se présente sous la forme d'une une carte SIM et/ou d'une carte bancaire et/ou de paiement et/ou un portemonnaie électronique.

Selon une caractéristique particulière, un tel circuit intégré se présente sous la forme d'une carte d'identité ou encore d'une carte d'accès à une ressource protégée comme par exemple une est une carte de contrôle d'accès.

Selon une caractéristique particulière, un tel circuit intégré se présente sous la forme d'une carte d'accès à des programmes de télévision.

Selon une autre caractéristique, un tel circuit intégré se présente sous la forme d'une carte sans contact.

Selon une autre caractéristique, le protocole de transmission est conforme à la norme 7816.

Selon une autre caractéristique, le protocole de transmission est conforme à au moins l'une quelconque des normes ISO 14223, ISO 14443, ISO 15693, ISO 18000:, ISO 18092, ISO 18185, ISO 21481, ASTM D7434, ASTM D7435, ASTM D7580 ou ISO 28560-2.

Selon une caractéristique particulière, ledit procédé de transmission de données, comprend en outre, préalablement au chiffrement de ladite commande, une étape d'adjonction, à ladite commande, d'une première donnée complémentaire, dite première donnée d'obfuscation.

Ainsi, en plus du masquage de la commande en elle-même, on réalise un masquage de la taille de cette commande. Dès lors, l'attaquant ne peut pas se baser sur la taille des commandes pour comprendre l'enchainement de ces commandes. Selon cette caractéristique, ce masquage s'effectue en ajoutant des données factices, qui sont également chiffrées.

Selon une caractéristique particulière, ledit procédé de transmission de données, comprend en outre, préalablement à la création de ladite deuxième commande, une étape d'adjonction, à ladite commande chiffrée, d'une deuxième donnée complémentaire, dite deuxième donnée d'obfuscation.

Ainsi, en plus du masquage de la commande en elle-même, on réalise un masquage de la taille de cette commande. Dès lors, l'attaquant ne peut pas se baser sur la taille des commandes pour comprendre l'enchainement de ces commandes.

Selon une caractéristique particulière, ladite étape d'adjonction, à ladite commande, d'une première donnée d'obfuscation comprend :
- une étape de calcul d'une taille de ladite donnée d'obfuscation en réalisant une différence entre une valeur d'un paramètre prédéterminé et la taille de ladite commande ;
- une étape d'obtention d'une donnée de longueur identique à la taille de ladite donnée d'obfuscation, ladite donnée comprenant une suite de bits ou d'octets aléatoires.

Ainsi, en plus du masquage de la commande en elle-même, on réalise un masquage de la taille de cette commande. Plus particulièrement, selon cette caractéristique, toutes les commandes ont une taille constante. Dès lors, l'attaquant ne distingue, lors de l'observation des échanges entre la carte et le terminal, qu'une succession de commandes de taille constante. L'attaquant n'est donc pas en mesure de déduire, de l'observation de ces échanges, le contenu probable des commandes.

Selon une caractéristique particulière, ledit procédé comprend en outre postérieurement à ladite étape de transmission, une étape de temporisation, durant une période temporelle aléatoire.

Selon une caractéristique particulière, ledit procédé comprend en outre, préalablement à ladite étape de transmission de ladite deuxième commande, une étape une étape de transmission d'une troisième commande.

Selon un mode de réalisation particulier, ladite troisième commande est générée aléatoirement.

Selon une caractéristique particulière, ladite étape de transmission comprend :
- une étape de découpage de la dite deuxième commande en une pluralité portions de commande ;
- une étape de transmission, de manière indépendante, de chaque portion de ladite pluralité de portions de commandes.

L'invention se rapporte également à un dispositif de transmission de données, à destination d'un circuit intégré, ledit dispositif et ledit circuit intégré communicant par l'intermédiaire d'une interface d'émission et de transmission de données. Un tel dispositif comprend au moins un module configuré pour effectuer :
- une génération, d'une commande destinée audit circuit intégré, ladite commande comprenant un entête de commande ;
- un chiffrement de ladite commande, délivrant une commande chiffrée ;
- une création d'une deuxième commande, ladite commande comprenant un entête de commande et des données, lesdites données étant constituées au moins en partie de ladite commande chiffrée ;
- une transmission de ladite deuxième commande audit circuit intégré.

Ainsi, la technique proposée permet d'apporter une solution à au moins certains inconvénients des techniques connues de protection contre des attaques basées sur l'espionnage et la modification des commandes échangées entre un terminal et une carte.

Plus précisément, la technique proposée fournit une protection, indépendante du chiffrement et/ou de la signature et/ou des MACs utilisés par les systèmes actuels, afin de réduire autant que possible la compréhension dont dispose l'attaquant sur la signification (au sens sémantique) et la nature précise (et non sur le contenu) des échanges entre le terminal et la carte.

Par ailleurs, la technique proposée permet de rester conforme au protocole ISO 7816 ou, plus généralement, de rester conforme à tout autre protocole d'échange de commandes et de données entre une carte et un terminal comme, par exemple la norme USB ou encore ISO 14223, ISO 14443, ISO 15693, ISO 18000 : (Parts 1 à 7), ISO 18092, ISO 18185, ISO 21481, ASTM D7434, ASTM D7435, ASTM D7580 ou ISO 28560-2.

Par ailleurs, la technique proposée permet de renforcer la sécurité du mode HCE en masquant la signification des commandes de ce mode.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes des procédés tel que mentionné ci-dessus, lorsqu'il sont exécutés par un terminal et/ou par un circuit intégré.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, une mémoire flash ou une mémoire d'un de stockage d'un autre type.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

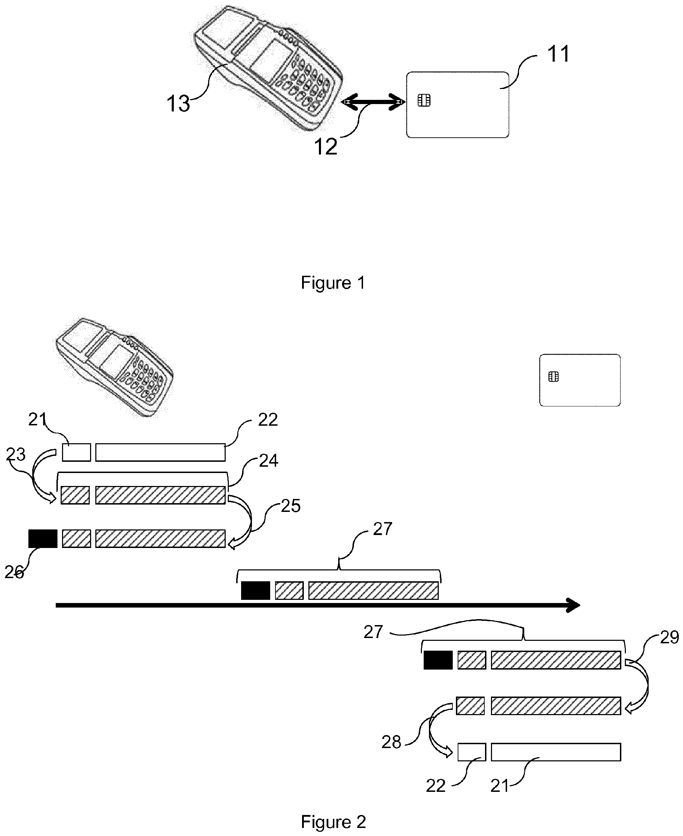

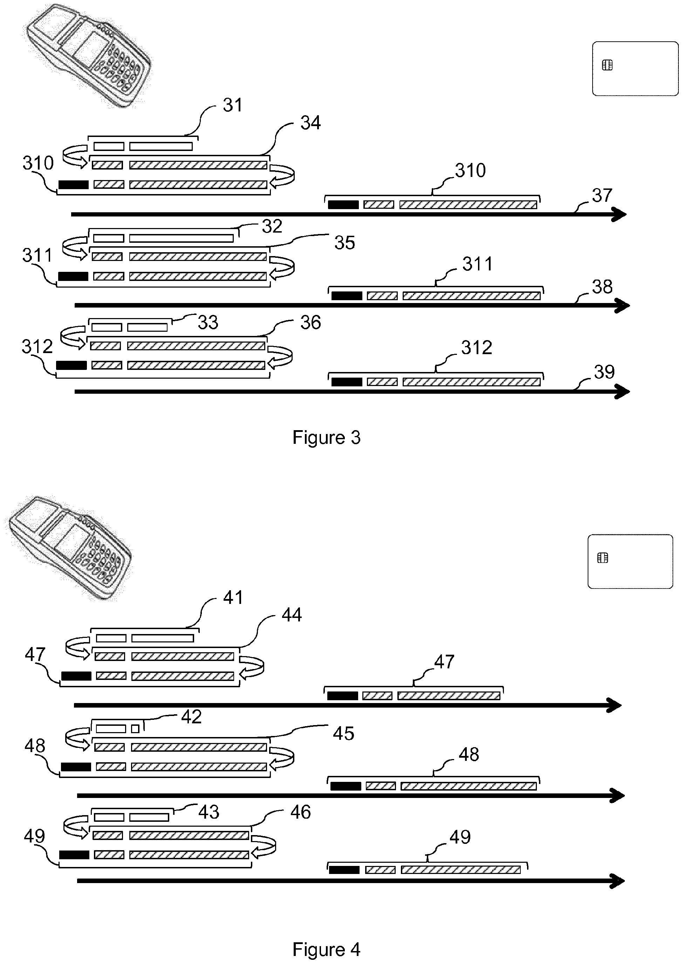

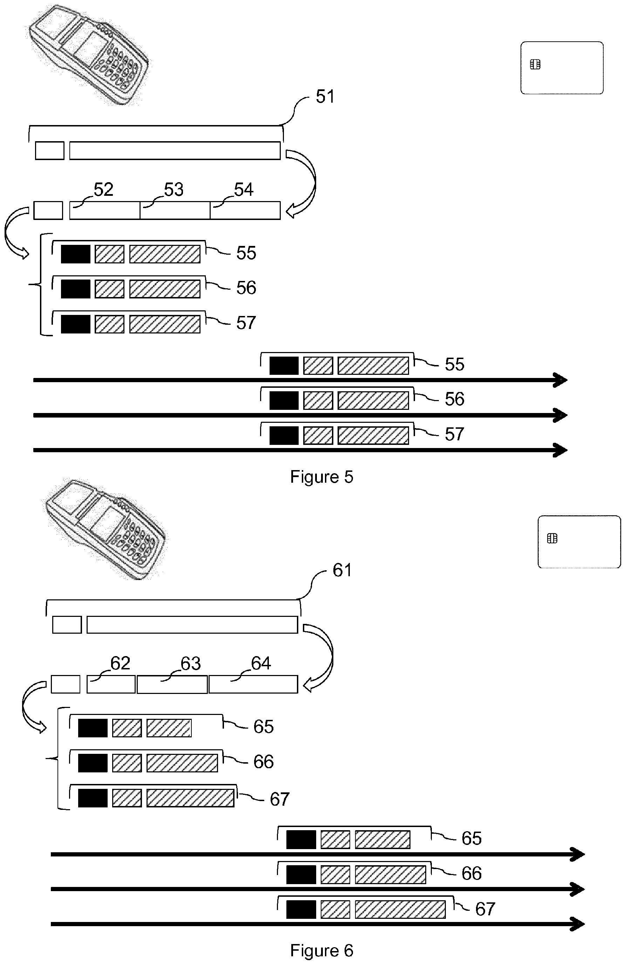

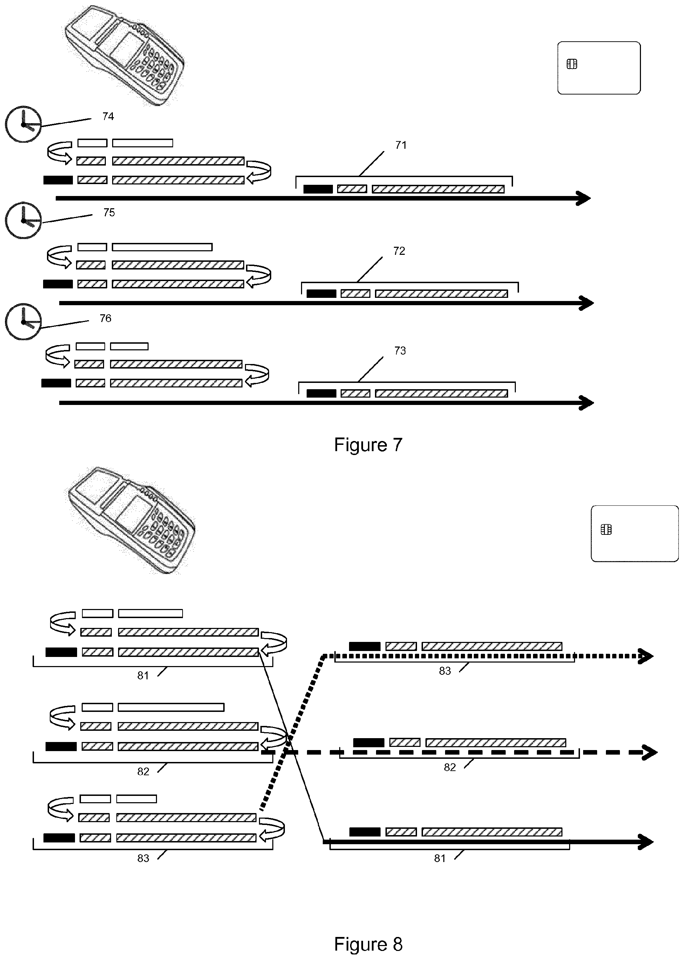

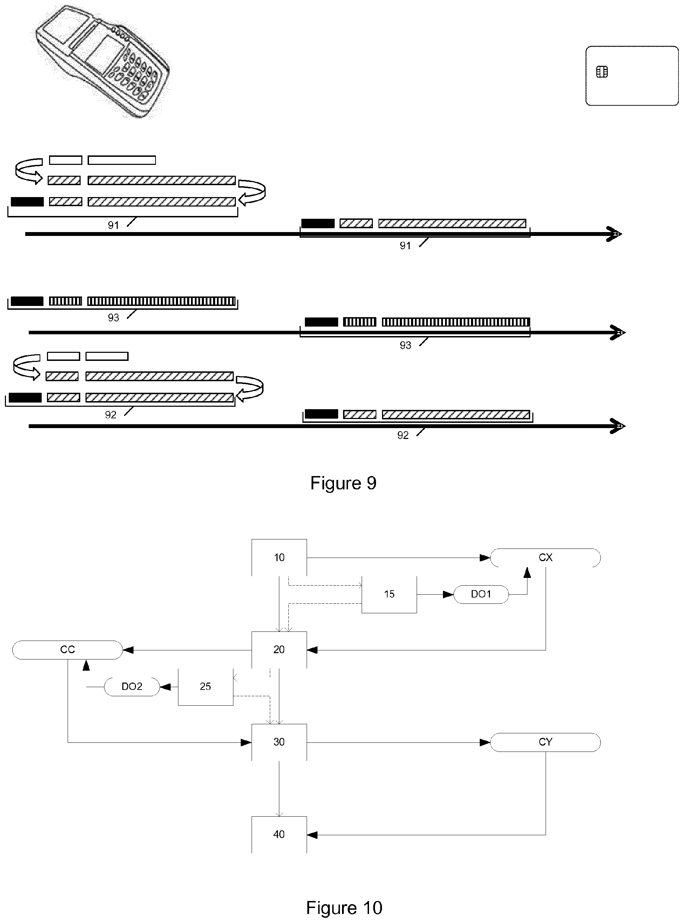

D'autres caractéristiques et avantages de la technique proposée apparaîtront plus clairement à la lecture de la description suivante d'un mode de réalisation préférentiel, donné à titre de simple exemple illustratif et non limitatif, et des dessins annexés, parmi lesquels :
- l'architecture classique d'une carte à puce et d'un terminal est décrite dans la figure 1 ;
- un premier mode de réalisation de la présente technique, dit *« mode direct* », où les commandes APDU et/ou les données applicatives sont chiffrées et/ou signées, est décrit dans la figure 2 ;
- un deuxième mode de réalisation de la présente technique, dit *« mode à taille constante* » où toutes les commandes et données associées ont la même taille permettant de réduire davantage le niveau informationnel, est décrit dans la figure 3 ;
- un troisième mode de réalisation de la présente technique, dit « *mode à taille masquée »* où un nombre aléatoire d'octets inutiles est ajouté aux données associées à chaque commande échangée permettant de réduire davantage le niveau informationnel, est décrit dans la figure 4 ;
- un quatrième mode de réalisation de la présente technique, dit « *mode à découpage à taille constante* » où les données associées à une commande sont découpées en des données associées à des sous-commandes de taille constante permettant de réduire davantage le niveau informationnel, est décrit dans la figure 5 ;
- un cinquième mode de réalisation de la présente technique, dit « *mode à découpage à taille aléatoire* » où les données associées à une commande sont saucissonnées en des données associées à des sous-commandes de taille aléatoire permettant de réduire davantage le niveau informationnel, est décrit dans la figure 6 ;
- un sixième mode de réalisation de la présente technique dit « *à délais inter-commande aléatoire* » où le terminal insère des délais d'attente aléatoires entre les commandes permettant de réduire davantage le niveau informationnel, est décrit dans la figure 7 ;
- un septième mode de réalisation de la présente technique dit « *à permutation aléatoire de commandes* » où le terminal permute, lorsque cela est applicativement possible,
- l'ordre des commandes permettant de réduire davantage le niveau informationnel, est décrit dans la figure 8 ;
- un huitième mode de réalisation de la présente technique dit « *à commandes leurres* » où le terminal génère et insère des commandes leurres permettant de réduire davantage le niveau informationnel, est décrit dans la figure 9.
- la figure 10 décrit le principe général de la technique, du point de vue du terminal ;
- la figure 11 décrit succinctement l'architecture matérielle d'un terminal adapté pour mettre en œuvre la présente technique ;
- la figure 12 décrit succinctement l'architecture matérielle d'un circuit intégré adapté pour mettre en œuvre la présente technique.

### 1. Description

### 1.1. Principe général

Comme explicité précédemment, l'un des problèmes des méthodes de sécurisation actuelles est lié à des choix réalisés pour effectuer le chiffrement des commandes et des réponses échangées. En effet, il a été considéré, au moment de la définition de la norme d'échange qu'il était suffisant de chiffrer le contenu des commandes et des réponses. Or, il a été constaté que ce chiffrement était insuffisant : en fonction du flot de commandes/réponse échangé, la personne mal intentionnée (fraudeur) est également en mesure d'obtenir des informations précieuses qui peuvent être utilisées pour déjouer le chiffrement des commandes. Dès lors, les inventeurs ont eu l'idée de proposer une méthode dans laquelle une seule commande est échangée entre le terminal et la carte. De même une seule réponse est fournie par la carte. Comme cela est détaillé par la suite, cette méthode est conforme aux normes d'échanges actuelles entre une carte et un terminal et ne nécessite que peu d'adaptations tant du côté du terminal que du côté de la carte.

La technique proposée est mise en œuvre dans un système comprenant au moins un terminal (13) et au moins un microprocesseur de carte à puce (11) communicant via un moyen d'interface d'entrée et de sortie de données (12). Le terminal (13) et la carte (11) étant munis de moyens de mémoire et de calcul cryptographique. La figure 1 illustre un système typique mettant en œuvre l'invention. Les terminal et carte à puce sont adaptés pour mettre en œuvre les procédés de protection d'APDU selon la présente technique.

La présente technique porte sur un produit programme exécuté au sein du terminal (13) comprenant des instructions de code de programme pour la mise en œuvre du procédé conforme à l'invention. La présente technique porte sur un produit programme exécuté au sein de la carte (11) comprenant des instructions de code de programme pour la mise en œuvre du procédé conforme à l'invention. La présente technique porte sur un médium de stockage lisible par le microprocesseur du terminal, et non transitoire, stockant un programme comprenant un jeu d'instructions exécutables pour mettre en œuvre un procédé conforme à l'invention. La présente technique porte sur un médium de stockage lisible par le microprocesseur de la carte, et non transitoire, stockant un programme comprenant un jeu d'instructions exécutables pour mettre en œuvre un procédé conforme à l'invention.

La technique proposée est basée sur le concept nouveau et inventif dénommé *Commande Aveugle par les inventeurs.* Il s'agit, d'un point de vue général, de n'utiliser qu'un seul type de commande du terminal vers la carte à puce. De manière analogue, il s'agit également, pour la carte à puce, de n'utiliser qu'un seul type de réponse.

Pour ce faire, d'une manière générale, une commande CX, destinée à une carte à puce, est construite par le terminal. Cette commande est construite en respectant les standards en vigueur. Cela signifie que la commande CX comprend un entête et éventuellement des données conformes à la norme (toutes le commandes ne comprennent pas de données). Les données sont protégées (par exemple chiffrées ou signées) lorsqu'une politique de sécurité est mise en œuvre, à l'aide de méthodes existantes (par exemple en utilisant une technique de Secure Messaging). Cette commande CX constitue une commande classique, qui selon l'art antérieur pourrait être transmise à la carte à puce. À la différence de l'art antérieur, cependant, cette commande X est alors protégée : par exemple la commande CX est chiffrée (CC). Ainsi, on ne chiffre pas seulement les données de la commande, mais également l'entête de celle-ci.

Selon la présente technique, cette commande CX est ensuite complétée par un second entête. Ce second entête, standard, permet de créer une commande résultante CY. Le second entête est indépendant de la commande CX, à l'exception d'un éventuel attribut relatif à la taille de la commande : cet attribut relatif à la taille est éventuellement, en fonction des modes de réalisation valorisé avec la taille de la commande CY. Cela permet de respecter et de faire fonctionner les méthodes de vérification de l'intégrité des commandes au niveau de la carte à puce.

La commande résultante CY est alors transmise à la carte à puce. La carte à puce met en œuvre les processus classique de vérification de la commande CY reçue. Lorsque cette vérification est effectuée (par exemple la taille de la commande est correcte par rapport à la taille annoncée), selon la présente technique, la commande CX est extraite de la commande CY. La commande CX est alors exécutée, conformément à l'art antérieur.

Cette technique est avantageuse à plus d'un titre. En premier lieu, elle permet de brouiller le signal transitant entre la carte et le terminal de manière simple. Un fraudeur ayant réussi à obtenir le signal transitant entre la carte et le terminal ne perçoit qu'une succession de commandes et de réponse qui ont toujours le même format. Il ne peut donc pas faire la différence entre les commandes qui sont échangées. En effet, du point de vue du fraudeur, la commande est la même car l'entête de commande est standard.

Plus spécifiquement, comme exposé en relation avec la figure 10, du point de vue du terminal, la méthode comprend les étapes suivantes :
- génération (10), d'une commande (CX) destinée audit circuit intégré, ladite commande comprenant un entête de commande ;
- chiffrement (20) de ladite commande(CX), délivrant une commande chiffrée (CC) ;
- création (30) d'une deuxième commande (CY), ladite commande comprenant un entête de commande et des données, lesdites données étant constituées au moins en partie de ladite commande chiffrée (CC) ;
- transmission (40) de ladite deuxième commande (CY) audit circuit intégré.

De manière complémentaire, des étapes d'adjonction de données d'obfuscation peuvent également être mise en œuvre. Ces données d'obfuscation, qui peuvent également s'appeler données de bourrage, peuvent être ajoutées avant et/ou après le chiffrement de la commande. Ainsi, optionnellement, le procédé comprend en outre, préalablement au chiffrement de ladite commande (CX), une étape d'adjonction (15), à ladite commande (CX), d'une première donnée complémentaire, dite première donnée d'obfuscation (DO1).

Par ailleurs, toujours optionnellement, le procédé comprend en outre, préalablement à la création de ladite deuxième commande (CY), une étape d'adjonction (25), à ladite commande chiffrée (CC), d'une deuxième donnée complémentaire, dite deuxième donnée d'obfuscation (DO2). Comme cela est explicité par la suite, les données d'obfuscation peuvent être de taille aléatoire ou de taille constate. Les données d'obfuscation peuvent avoir pour finalité de masquer la taille réelle de la commande.

Couplé à d'autres techniques, telles que décrites par la suite, la détermination de la commande est encore plus complexe. Il est bien évident que les modes de réalisation décrits par la suite sont librement combinables entre eux, sans que ces combinaisons sortent du cadre de la présente. Ainsi, les bénéfices individuels de chaque mode de réalisation se combinent pour permettre un masquage toujours plus efficace des échanges intervenant entre le terminal et le circuit intégré.

La technique décrite se rapporte également à un procédé de traitement mis en œuvre entre un terminal et un circuit intégré, ledit terminal et ledit circuit intégré communicant par l'intermédiaire d'une interface d'émission et de transmission de données, ledit procédé comprenant au moins une itération des étapes suivantes, mises en œuvre par le circuit intégré :
- réception de ladite deuxième commande en provenance du terminal ;
- suppression de l'entête de la deuxième commande et obtention d'au moins une portion de commande relative à ladite commande chiffrée (CC) ;
- déchiffrement de ladite commande(CC), délivrant la première commande (CX) ;
- traitement de la première commande (CX).

De manière complémentaire, ce traitement de la première commande par le circuit intégré peut nécessiter la fourniture d'une réponse par celui-ci. Cette réponse est alors transmise par le circuit intégré au terminal. Cette transmission s'accompagne également de mesures d'obfuscation pouvant comprendre le découpage de la réponse en plusieurs réponses, l'adjonction de données d'obfuscation à la réponse, etc.

Les différentes étapes des procédés précédemment présentés sont mise en œuvre par l'intermédiaire de composants, qu'ils soient matériels ou logiciels, qui sont intégrés soit dans le terminal soit dans le circuit intégré. Ainsi, par exemple, les opérations cryptographiques, telles que les opérations de chiffrement, peuvent être mise en œuvre par un composant matériel cryptographique, tandis que les étapes d'obtention de données d'obfuscation, de bourrage, etc. peuvent être mises en œuvre de manière logicielle.

### 5.2. Modes de réalisation

Selon un *premier* mode de réalisation, dit *« mode direct* », illustré à la **figure 2****,** une Commande Aveugle (27) est construite en considérant l'entête d'une commande ISO (21) CLA INS P1 P2 P3 et les données qui lui sont associées (22) comme une donnée passive D (21+22).

D est protégée cryptographiquement (23) par le terminal (par exemple D est chiffrée, signée et/ou MACée) afin de résulter en une commande protégée P (24).

Une seconde entête CLA INS P1 P2 P3 (26) universelle et anonyme est alors ajoutée (25) à P afin de former une Commande Aveugle « A » (27). Les codes CLA INS P1 P2 P3 utilisés pour former le second entête (26) sont indépendants de D (exception faite de P3, encodant la taille).

« A » est donc transmise à la carte à l'aide d'une commande ISO universelle dite Commande de Transport Aveugle (27).

La carte recevant « A » ôte (29) le second entête ISO (26) afin de retrouver P (24).

La carte déchiffre (28) P et retrouve D (21+22).

Éventuellement la carte vérifie l'intégrité de D.

Puis la carte interprète (exécute) la commande D.

Si l'interprétation de la commande D requiert la transmission d'octets U de la carte, ces octets sont chiffrés afin de ne pas en relever le contenu et, ce faisant, empêcher de comprendre la nature de la commande D. Afin de protéger le système contre une attaque consistant à inférer D à partir de la taille de U, la carte peut soit rembourrer les octets U jusqu'à atteindre une taille fixe ou, au contraire, concaténer à U une quantité aléatoire d'octets inutiles ayant pour but de masquer la vraie taille de U.

Ainsi, un attaquant observant les échanges entre le terminal et la carte ne peut inférer que très peu d'informations de cette observation. En effet, l'attaquant, ne voyant que des commandes de type A ne peut pas savoir quelles commandes D sont cachées au sein des commandes de type A transmises par le terminal à la carte et ne connait donc pas les fonctions activées au sein de la carte par le terminal.

Selon un *deuxième* mode de réalisation, dit « *mode à taille constante* », illustré à la **figure 3****,** on dissimule la taille des données transmises lors de la commande D.

À cet effet, toutes les commandes D[i] (31, 32, 33) sont automatiquement complétées par l'ajout d'octets inutiles afin de rendre tous les D[i] (34, 35, 36) de taille constante. Ainsi, un attaquant observant les échanges (37, 38, 39) entre le terminal et la carte ne peut pas inférer la nature des commandes D[i] d'après la taille des données que les commandes A[i] (310, 311, 312) véhiculent.

Alternativement, et dans un souci d'économie de temps de calcul, il est possible de ne pas rallonger inutilement les messages D[i] mais de prendre les chiffrés P[i] et leur ajouter autant d'octets aléatoires que de besoin afin de faire atteindre à toutes les commandes A[i] une même taille constante.

Selon un *troisième* mode de réalisation, dit « *mode à taille masquée»,* illustré à la **figure 4****,** on dissimule la taille des données transmises lors des commandes D[i] par un moyen différent du deuxième mode de réalisation.

À cet effet, au moins certaines des commandes D[i] (41, 42, 43) sont complétées l'ajout par un nombre aléatoire d'octets aléatoires inutiles afin de rendre tous les P[i] (44, 45, 46) de taille décorrélée de la taille des données utiles contenues dans les D[i]. Cela induit des P[i] (44, 45, 46) correspondants de taille aléatoire. Ainsi, un attaquant observant les échanges (47, 48, 49) entre le terminal et la carte ne peut pas inférer la nature des commandes D[i] à partir de la taille des données échangées entre la carte et le terminal.

Alternativement, et dans un souci d'économie de temps de calcul, il est possible de ne pas rallonger inutilement les messages D[i] mais de prendre les chiffrés P[i] et leur ajouter autant d'octets aléatoires que de besoin afin de faire atteindre à toutes les commandes A[i] diverses tailles aléatoires.

Selon un *quatrième* mode de réalisation, dit « *mode à découpage à taille constante»,* illustré à la **figure 5****,** on dissimule la taille des données transmises lors de la commande D par un moyen différent de ceux du *deuxième* et du troisième modes de réalisation.

À cet effet, la commande D (51) est découpée en des blocs de taille constante (52, 53, 54). Ce faisant, la commande D est transformée en une pluralité de commandes P[i,j] (55,56,57) de taille décorrélée de la taille des données utiles contenues dans les D[i]. Ainsi, un attaquant observant les échanges entre le terminal et la carte ne peut pas inférer la nature des commandes D[i] à partir de la taille des données que les données de D[i] véhiculent car la fin de D[i] n'est pas distinguable du début de la commande suivante D[i+1].

Selon un *cinquième* mode de réalisation, dit *« mode à découpage à taille aléatoire*», illustré à la **figure 6****,** on dissimule la taille des données transmises lors de la commande D par un autre moyen que ceux du *deuxième* ou du *troisième* ou du *quatrième* mode de réalisation.

À cet effet, la commande D (61) est découpées en des blocs de taille aléatoire (62, 63, 64). Ce faisant, la commande D est transformée en une pluralité de commandes P[i,j] (65, 66, 67) de taille décorrélée de la taille des données utiles contenues dans D. Ainsi, un attaquant observant les échanges entre le terminal et la carte ne peut pas inférer la nature de la commande D d'après la taille des données transmises.

Selon un *sixième* mode de réalisation, dit « *à délais inter-commande aléatoire»,* illustré à la **figure 7****,** on dissimule la nature des commandes D[i] en ne permettant pas à l'attaquant de mesurer le temps passé entre ces commandes.

À cet effet, après et/ou avant la transmission de chaque commande aveugle A[i] (71, 72, 73) le terminal observe un temps d'attente aléatoire (74, 75, 76), également appelé temporisation durant une période temporelle aléatoire. De même la carte peut également attendre un temps aléatoire avant de transmettre les données chiffrées U[i] attendues en réponse à la commande A[i]. Ainsi, un attaquant observant les échanges entre le terminal et la carte ne peut pas inférer la nature des commandes D[i] transmises à la carte par le terminal en mesurant les temps écoulés entre commandes D[i] ni en mesurant les temps écoulés entre la réception des commandes A[i] par la carte et la transmission de la réponse U[i] par la carte.

Selon un *septième* mode de réalisation, dit « *à permutation aléatoire de commandes»,* illustré à la **figure 8****,** on dissimule la nature des commandes D[i] en ne permettant pas à l'attaquant d'inférer la nature des commandes en observant leur ordre d'émission vers la carte.

À cet effet, lorsque l'ordre de commandes D[i] n'a pas d'incidence sur le fonctionnement de la carte, et donc sur l'application sous-jacente, le terminal permute les commandes D[i] de manière aléatoire avant de transmettre les A[i] correspondants (81, 82, 83) à la carte. Ainsi, un attaquant observant les échanges entre le terminal et la carte ne peut pas inférer la nature des commandes D[i] d'après l'ordre des commandes A[i] correspondants aux D[i].

Selon un *huitième* mode de réalisation, dit « *à commandes leurres*», illustré à la **figure 9**, il on dissimule la nature des commandes D[i] en ne permettant pas à l'attaquant d'inférer la nature des commandes en comptant leur nombre.

À cet effet, lorsqu'une séquence de commandes D[i] doit être transmise à la carte, le terminal insère, dans le flux des A[i] correspondants aux D[i] (91, 92), des leurres (93). Un leurre (93) est une commande A[i] non interprétée par la carte autrement qu'en envoyant une réponse aléatoire simulant un chiffré U[i] et obéissant à une distribution de probabilités similaire ou identique à celle induite par l'application mise en œuvre entre le terminal et la carte. Ainsi, un attaquant observant les échanges entre le terminal et la carte ne peut pas inférer la nature des commandes D[i] et ce, même en comptant le nombre des A[i] envoyés par la carte au terminal.

### 5.3. Dispositifs de mises en œuvre.

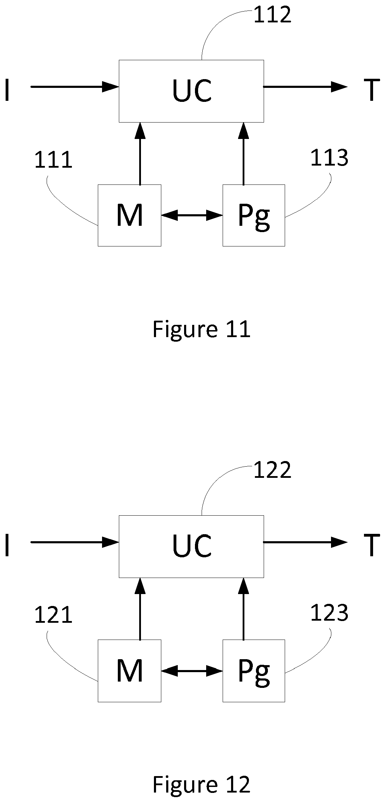

On décrit, en relation avec la **figure 11**, un dispositif de transmission de données comprenant des moyens permettant l'exécution du procédé décrit préalablement.

Par exemple, le dispositif de transmission comprend une mémoire 111 constituée d'une mémoire tampon, une unité de traitement 112, équipée par exemple d'un microprocesseur, et pilotée par le programme d'ordinateur 113, mettant en œuvre les étapes nécessaires à la création, au chiffrement et à la transmission de commandes obfusquées, dites commandes aveugles.

À l'initialisation, les instructions de code du programme d'ordinateur 113 sont par exemple chargées dans une mémoire avant d'être exécutées par le processeur de l'unité de traitement 112. L'unité de traitement 112 reçoit en entrée par exemple une commande de base à transmettre à un circuit intégré. Le microprocesseur de l'unité de traitement 112 met en œuvre les étapes du procédé, selon les instructions du programme d'ordinateur 113 pour permettre la création de la commande aveugle.

Pour cela, le dispositif de traitement comprend, outre la mémoire tampon 111, des moyens d'obtention de matériels de chiffrement, des moyens de chiffrement et des moyens d'obtention de données d'obfuscation, telles que des données de bourrage.

Ces moyens peuvent être pilotés par le processeur de l'unité de traitement 112 en fonction du programme d'ordinateur 113.

On décrit, en relation avec la **figure 12****,** un circuit intégré, par exemple inséré dans une carte, afin de former une carte à puce, comprenant des moyens permettant l'exécution du procédé décrit préalablement.

Par exemple, le dispositif de vérification comprend une mémoire 121 constituée d'une mémoire tampon, une unité de traitement 122, équipée par exemple d'un microprocesseur, et pilotée par le programme d'ordinateur 123, mettant en œuvre nécessaires à la mise en œuvre des fonctions de vérification.

À l'initialisation, les instructions de code du programme d'ordinateur 123 sont par exemple chargées dans une mémoire avant d'être exécutées par le processeur de l'unité de traitement 122. L'unité de traitement 122 reçoit en entrée par exemple une commande chiffrée, dite commande aveugle. Le microprocesseur de l'unité de traitement 122 met en œuvre les étapes du procédé de traitement, selon les instructions du programme d'ordinateur 123 pour permettre le déchiffrement de la commande, le traitement de la commande déchiffrée et l'éventuelle transmission d'une réponse à cette commande.

Pour cela, le dispositif comprend, outre la mémoire tampon 121, des moyens d'obtention de clé de chiffrement/déchiffrement ; ces moyens peuvent se présenter sous la forme d'un processeur ou d'un ensemble de ressources sécurisées permettant de sécuriser la saisie de l'autorisation. Le dispositif comprend également des moyens de traitement cryptographiques ; ces moyens de traitement comprennent par exemple un processeur de chiffrement dédié.

Ces moyens peuvent être pilotés par le processeur de l'unité de traitement 122 en fonction du programme d'ordinateur 123.

### 5.4. Le mode Host Card Emulation (HCE)

Un autre domaine d'application particulièrement intéressant de la présente technique est le mode dit HCE (« Host Card Emulation »). Le paiement mobile NFC actuel se base sur un élément sécurisé dit Secure Element (SE) : la carte SIM majoritairement. Cette dernière, propriété de l'opérateur mobile, est source de contraintes pour les fournisseurs de solutions de paiements mobiles. Pour y remédier, les acteurs monétiques ont créé l'émulation de cartes hébergées plus connue sous le sigle anglais HCE (Host Card Emulation).

### 5.4.1.Architecture classique, sans HCE.

Pour bien le fonctionnement du HCE, il est important de rappeler celui du modèle actuel, dans lequel le SE est embarqué dans le terminal de communication mobile. Le paiement mobile NFC « classique » est un paiement où le smartphone fait office de carte bancaire. L'antenne NFC permet au terminal de communication de dialoguer avec le terminal de paiement électronique (TPE). Le contrôleur NFC sollicite le SE (souvent la carte SIM, on parle alors de « SIM-centric ») qui contient les données bancaires sensibles (numéro de carte appelé aussi PAN, clés cryptographiques, ...). À aucun moment, le système d'exploitation n'a donc connaissance de ces données. C'est là que réside la robustesse du NFC SE. L'installation de l'application de paiement au sein de la carte SIM a fait émerger de nouveaux acteurs comme les tiers de confiance (Trusted Service Manager : TSM) ; implique les opérateurs mobiles (Mobile Network Operator : MNO) ; et d'une manière plus générale complique l'écosystème NFC, aussi bien pour les acteurs que pour les porteurs.

### 5.4.2. Fonctionnement du HCE

Spécifié initialement par la startup SimplyTapp en 2012, le Host Card Emulation a fait son apparition sur le marché avec le système d'exploitation CyanogenMod™. Mais c'est l'adoption au sein du système d'exploitation Android™ 4.4 KitKat™ qui l'a rendu populaire.

Conceptuellement, la technologie du HCE permet la désynchronisation du NFC avec le SE hébergé par le terminal de communication ; le système d'exploitation (OS) pilote ainsi directement le NFC. Ainsi sous sa forme la plus primitive, l'application mobile installée dans l'OS peut embarquer les données bancaires. Mais la technologie permet des choses bien plus intéressantes comme le stockage des données dans le cloud, plus connue sous le nom « SE-in-the-cloud ».

Par ailleurs, afin de limiter le risque de récupération des données sensibles par un malware exécuté dans la mémoire du terminal de communication, les ingénieurs ont eu l'idée de générer des numéros de cartes jetables. Cette sécurité est appelée « tokenisation ». Cette dernière a fait l'objet d'une spécification par l'organisme EMVCo permettant d'assurer l'interopérabilité.

La technique décrite précédemment trouve également une application dans ce mode de fonctionnement. En effet, le circuit intégré n'est alors pas une carte de paiement à puce, mais il est par exemple la carte SIM du terminal de communication. Alternativement, lorsque des données sont échangées au travers d'un réseau de communication, par exemple des APDU par l'intermédiaire du réseau IP, un circuit intégré virtuel est simulé au sein de ce réseau.

## Revendications

1. Procédé de transmission de données, mis en œuvre entre un terminal et un circuit intégré, ledit terminal et ledit circuit intégré communicant par l'intermédiaire d'une interface d'émission et de transmission de données, ledit procédé comprenant au moins une itération des étapes suivantes, mises en œuvre par le terminal :
- génération (10), d'une première commande (CX) destinée audit circuit intégré, ladite première commande comprenant un premier entête de commande ;
- chiffrement (20) des données de ladite première commande (CX) et du premier entête de commande, délivrant une première commande chiffrée (CC) comprenant les données de la première commande et le premier entête de commande chiffré;
- création (30) d'une deuxième commande (CY), ladite deuxième commande comprenant un second entête de commande et des données, lesdites données étant constituées au moins en partie de ladite première commande chiffrée (CC) ;
- ladite deuxième commande (CY) étant transmise audit circuit intégré dans un flux de commande dans lequel des leurres sont insérés.

2. Procédé de transmission de données, selon la revendication 1, **caractérisé en ce qu'**il comprend en outre, préalablement au chiffrement de ladite première commande (CX), une étape d'adjonction (15), à ladite première commande (CX), d'une première donnée complémentaire, dite première donnée d'obfuscation (DO1).

3. Procédé de transmission de données, selon la revendication 1, **caractérisé en ce qu'**il comprend en outre, préalablement à la création de ladite deuxième commande (CY), une étape d'adjonction (25), à ladite première commande chiffrée (CC), d'une deuxième donnée complémentaire, dite deuxième donnée d'obfuscation (DO2).

4. Procédé de transmission de données, selon la revendication 1, **caractérisé en ce que** ladite étape d'adjonction (15), à ladite première commande (CX), d'une première donnée d'obfuscation (DO1) comprend :
- une étape de calcul d'une taille de ladite donnée d'obfuscation (TDo) en réalisant une différence entre une valeur d'un paramètre prédéterminé et la taille de ladite première commande (CX) ;
- une étape d'obtention d'une donnée de longueur identique à la taille de ladite donnée d'obfuscation (TDo), ladite donnée comprenant une suite de bits ou d'octets aléatoires.

5. Procédé de transmission de données, selon la revendication 1, **caractérisé en ce qu'**il comprend en outre postérieurement à ladite étape de transmission (40), une étape de temporisation, durant une période temporelle aléatoire.

6. Procédé de transmission de données, selon la revendication 1, **caractérisé en ce qu'**il comprend en outre, préalablement à ladite étape de transmission (40) de ladite deuxième commande, une étape de transmission d'une troisième commande.

7. Procédé selon la revendication 6, **caractérisé en ce que** la troisième commande est générée aléatoirement.

8. Procédé selon la revendication 1, **caractérisé en ce que** ladite étape de transmission (40) comprend :
- une étape de découpage de la dite deuxième commande en une pluralité portions de commande ;
- une étape de transmission, de manière indépendante, de chaque portion de ladite pluralité de portions de commandes.

9. Dispositif de transmission de données, à destination d'un circuit intégré, ledit dispositif et ledit circuit intégré communicant par l'intermédiaire d'une interface d'émission et de transmission de données, ledit dispositif comprenant au moins un module configuré pour effectuer :
- une génération (10), d'une première commande (CX) destinée audit circuit intégré, ladite première commande comprenant un premier entête de commande ;
- un chiffrement (20) des données de ladite première commande(CX) et du premier entête de commande,, délivrant une première commande chiffrée (CC) comprenant les données de la première commande et le premier entête de commande chiffré ;
- une création (30) d'une deuxième commande (CY), ladite deuxième commande comprenant un deuxième entête de commande et des données, lesdites données étant constituées au moins en partie de ladite première commande chiffrée (CC) ;
- ladite deuxième commande (CY) étant transmise audit circuit intégré dans un flux de commande dans lequel des leurres sont insérés.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de transmission selon la revendication 1, lorsqu'il est exécuté sur un processeur.

## Patentansprüche

1. Datenübertragungsverfahren, das zwischen einem Endgerät und einem integrierten Schaltkreis umgesetzt wird, wobei das Endgerät und der integrierte Schaltkreis über eine Datenausgabe- und Datenübertragungsschnittstelle kommunizieren, wobei das Verfahren mindestens eine Iteration der folgenden Schritte aufweist, die vom Endgerät umgesetzt werden:
- Erzeugen (10) eines ersten Befehls (CX), der für den integrierten Schaltkreis bestimmt ist, wobei der erste Befehl einen ersten Befehlskopf aufweist,
- Verschlüsseln (20) der Daten des ersten Befehls (CX) und des ersten Befehlskopfs, wodurch ein erster verschlüsselter Befehl (CC) ausgegeben wird, der die Daten des ersten Befehls und den ersten verschlüsselten Befehlskopf aufweist,
- Erstellen (30) eines zweiten Befehls (CY), wobei der zweite Befehl einen zweiten Befehlskopf und Daten aufweist, wobei die Daten mindestens teilweise aus dem ersten verschlüsselten Befehl (CC) bestehen,
- wobei der zweite Befehl (CY) in einem Befehlsfluss, in den Ablenkungen eingefügt werden, an den integrierten Schaltkreis übertragen wird.

2. Datenübertragungsverfahren nach Anspruch 1, **dadurch gekennzeichnet, dass** es ferner vor dem Verschlüsseln des ersten Befehls (CX) einen Schritt des Hinzufügens (15) einer ersten zusätzlichen Dateneinheit, die erste Verschleierungsdateneinheit (DO1) genannt wird, zum ersten Befehl (CX) aufweist.

3. Datenübertragungsverfahren nach Anspruch 1, **dadurch gekennzeichnet, dass** es ferner vor dem Erstellen des zweiten Befehls (CY), einen Schritt des Hinzufügens (25) einer zweiten zusätzlichen Dateneinheit, die zweite Verschleierungsdateneinheit (DO2) genannt wird, zum ersten verschlüsselten Befehl (CC) aufweist.

4. Datenübertragungsverfahren nach Anspruch 1, **dadurch gekennzeichnet, dass** der Schritt des Hinzufügens (15) einer ersten Verschleierungsdateneinheit (DO1) zum ersten Befehl (CX) aufweist:
- einen Schritt des Berechnens einer Größe der Verschleierungsdateneinheit (TDo) durch Erzeugen von einer Differenz zwischen einem Wert eines vorbestimmten Parameters und der Größe des ersten Befehls (CX),
- einen Schritt des Erhaltens einer Dateneinheit mit einer Länge, die mit der Größe der Verschleierungsdateneinheit (TDo) identisch ist, wobei die Dateneinheit eine Folge von zufälligen Bits oder Bytes aufweist.

5. Datenübertragungsverfahren nach Anspruch 1, **dadurch gekennzeichnet, dass** es ferner nach dem Schritt des Übertragens (40) einen Schritt des Verzögerns während eines willkürlichen Zeitraums aufweist.

6. Datenübertragungsverfahren nach Anspruch 1, **dadurch gekennzeichnet, dass** es ferner vor dem Schritt des Übertragens (40) des zweiten Befehls einen Schritt des Übertragens eines dritten Befehls aufweist.

7. Verfahren nach Anspruch 6, **dadurch gekennzeichnet, dass** der dritte Befehl zufällig generiert wird.

8. Verfahren nach Anspruch 1, **dadurch gekennzeichnet, dass** der Schritt des Übertragens (40) aufweist:
- einen Schritt des Zerlegens des zweiten Befehls in mehrere Befehlsabschnitte,
- einen Schritt des Übertragens jedes Befehlsabschnitts der mehreren Befehlsabschnitte auf unabhängige Weise.

9. Vorrichtung zum Übertragen von Daten an einen integrierten Schaltkreis, wobei die Vorrichtung und der integrierte Schaltkreis über eine Datenausgabe- und Datenübertragungsschnittstelle kommunizieren, wobei die Vorrichtung mindestens ein Modul aufweist, das konfiguriert ist, um durchzuführen:
- ein Erzeugen (10) eines ersten Befehls (CX), der für den integrierten Schaltkreis bestimmt ist, wobei der erste Befehl einen ersten Befehlskopf aufweist,
- ein Verschlüsseln (20) der Daten des ersten Befehls (CX) und des ersten Befehlskopfs, wodurch ein erster verschlüsselter Befehl (CC) ausgegeben wird, der die Daten des ersten Befehls und den ersten verschlüsselten Befehlskopf aufweist,
- ein Erstellen (30) eines zweiten Befehls (CY), wobei der zweite Befehl einen zweiten Befehlskopf und Daten aufweist, wobei die Daten mindestens teilweise aus dem ersten verschlüsselten Befehl (CC) bestehen,
- wobei der zweite Befehl (CY) in einem Befehlsfluss, in den Ablenkungen eingefügt sind, an den integrierten Schaltkreis übertragen wird.

10. Computerprogrammprodukt, das von einem Kommunikationsnetz herunterladbar ist und/oder auf einem computerlesbaren Medium gespeichert und/oder von einem Mikroprozessor ausführbar ist, **dadurch gekennzeichnet, dass** es Programmcodebefehle für die Ausführung eines Übertragungsverfahrens nach Anspruch 1 aufweist, wenn es auf einem Prozessor ausgeführt wird.

## Claims

1. Method for transmitting data implemented between a terminal and an integrated circuit, said terminal and said integrated circuit communicating by means of an interface for transmitting and receiving data, said method comprising at least one iteration of the following steps, implemented by the terminal,
- generating (10) a first command intended for said integrated circuit, said first command comprising a first command header;
- encrypting (20) data of said first command (CX) and of said first command header, delivering a first encrypted command (CC) comprising the data of said first command and said encrypted first command header;
- creating (30) a second command (CY), said second command comprising a second command header and data, said data being constituted at least partly by said encrypted first commands (CC);
- said second command (CY) being transmitted to said integrated circuit in a command flow wherein decoys are inserted.

2. Method for transmitting data according to claim 1, **characterized in that** it further comprises a step, prior to the encryption of said first command, for the addition (15), to said first command (CX), of a first complementary piece of data, called a first piece of obfuscation data (DO1).

3. Method for transmitting data according to claim 1, **characterized in that** it furthermore comprises a step, prior to the creation of said second command (CY), for the addition (25), to said encrypted first command (CC), of a second piece of complementary data called a second piece of obfuscation data (DO2).

4. Method for transmitting data according to claim 1, **characterized in that** said step of addition (15), to said first command (CX), of a first piece of obfuscation data (DO1) comprises :
- a step for computing the size of said piece of obfuscation data by obtaining a difference between a value of a predetermined parameter and the size of said first command (CX);
- a step for obtaining a piece of data with a length identical to the size of said piece of obfuscation data (TDo), said data comprising a sequence of bits or random bytes.

5. Method for transmitting data according to claim, **characterized in that** it further comprises, subsequently to said step for transmitting (40), a step of time-out during a random time period.

6. Method for transmitting data according to claim 1, **characterized in that** it further comprises, prior to said step (40) for transmitting said second command, a step for transmitting a third command.

7. Method according to claim 6, **characterized in that** said third command is generated randomly.

8. Method according to claim 1, **characterized in that** said step for transmitting (40) comprises:
- a step for sub-dividing said second command into a plurality of command portions;
- a step for transmitting each portion of said plurality of command portions independently.

9. Device for transmitting data addressed to an integrated circuit, said device and said integrated circuit communicating by means of an interface for transmitting and receiving data, said device comprising at least one module configured to perform:
- a generation (10) of a first command (CX) intended for said integrated circuit, said first command comprising a first command header;
- an encryption (20) of said first command (CX) and of said first command header delivering a first encrypted command (CC) comprising the data of said first command and said encrypted first command header;
- a creation (20) of a second command (CY), said second command comprising a second command header and data, said data being constituted at least partly by said encrypted first command (CC) ;
- said second command (CY) being transmitted to said integrated circuit in a command flow wherein decoys are inserted.

10. Computer program product downloadable from a communications network and/or stored on a computer-readable carrier and/or executable by a microprocessor, **characterized in that** it comprises program code instructions for executing a method of transmission according to claim 1, when it is executed on a computer.
